(19) **Europäisches Patentamt / European Patent Office / Office européen des brevets**

(11) **EP 4 513 031 A1**

(12) **EUROPEAN PATENT APPLICATION**
published in accordance with Art. 153(4) EPC

(43) Date of publication:
**26.02.2025 Bulletin 2025/09**

(21) Application number: **23927108.3**

(22) Date of filing: **30.10.2023**

(51) International Patent Classification (IPC):
**F03D 80/60** (2016.01)

(52) Cooperative Patent Classification (CPC):
**F03D 17/00; F03D 80/60; F04D 27/00;** Y02E 10/72

(86) International application number:
**PCT/CN2023/127945**

(87) International publication number:
**WO 2024/187767 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.03.2023 CN 202310243747**

(71) Applicant: **CRRC Shandong Wind Power Co., Ltd.**
**Shandong 250101 (CN)**

(72) Inventors:
• **REN, Liye**
  **Shandong 250101 (CN)**
• **WANG, Xiangdong**
  **Shandong 250101 (CN)**

• **ZHANG, Haihua**
  **Shandong 250101 (CN)**
• **ZHANG, Bingquan**
  **Shandong 250101 (CN)**
• **LIU, Fucai**
  **Shandong 250101 (CN)**
• **LIU, Rongrong**
  **Shandong 250101 (CN)**
• **LI, Chao**
  **Shandong 250101 (CN)**

(74) Representative: **von Tietzen und Hennig, Nikolaus**
**Lorenz Seidler Gossel**
**Rechtsanwälte Patentanwälte**
**Partnerschaft mbB**
**Widenmayerstraße 23**
**80538 München (DE)**

(54) **METHOD AND APPARATUS FOR ADAPTIVELY CONTROLLING NACELLE TEMPERATURE OF WIND TURBINE GENERATOR SYSTEM, DEVICE, AND MEDIUM**

(57)    The present invention relates to the technical field of wind power control, and particularly provides a method and apparatus for adaptively controlling a nacelle temperature of a wind turbine generator system, a device, and a medium. The method comprises: acquiring a nacelle temperature value, and calculating an average active power of a wind turbine generator system in a first time threshold; according to the calculated average active power, calculating a nacelle temperature alarm threshold; when the nacelle temperature is higher than the alarm threshold, finding a speed set value of a cooling fan in a correspondence table, and controlling the cooling fan to work according to the found speed set value; when the nacelle temperature continues to rise, controlling the cooling fan to work according to a first speed threshold, and when an active power change value is less than a power change threshold, updating the first speed threshold to the correspondence table of active powers and speed set values; and when the nacelle temperature is less than a stop threshold, controlling the cooling fan to stop working. Frequent speed regulation of the cooling fan can be avoided, and the problem that the service life of the cooling fan is shortened due to frequent speed regulation is solved.

Start

Collect a temperature in a nacelle

Calculate an average active power of a wind turbine generator system over a first time threshold, and calculate an alarm threshold for a temperature in the nacelle based on the calculated average active power

Determine whether the temperature in the nacelle is higher than the alarm threshold

No

Yes

Find a specified speed of a heat-dissipating fan in a table of correspondences between active powers and specified speeds based on a current active power of the wind turbine generator system, and control the heat-dissipating fan to work at the specified speed found

Collect a current temperature in the nacelle after a second time threshold elapses

Determine whether the current temperature in the nacelle is higher than the temperature in the nacelle collected at a previous moment

No

Yes

Determine whether the specified speed of the heat-dissipating fan is lower than a rated speed

No

Yes

Control the wind turbine generator system to enter a power-limited operation mode, and reduce a current specified active power of the wind turbine generator system by a first power threshold

Control the heat-dissipating fan to work at a first speed threshold

Determine whether an active power change of the wind turbine generator system over the first time threshold is less than a power change threshold

No

Determine whether the temperature in the nacelle is lower than a stop threshold

No

Yes

Yes

Control the heat-dissipating fan to stop working

Update the first speed threshold into the table of correspondences between active powers and specified speeds

End

FIG. 1

2

## Description

The present invention claims priority to Chinese Patent Application No. 202310243747.9, filed with the China National Intellectual Property Administration on March 15, 2023 and entitled "METHOD AND APPARATUS FOR ADAPTIVELY CONTROLLING TEMPERATURE IN NACELLE IN WIND TURBINE GENERATOR SYSTEM, AND DEVICE AND MEDIUM THEREOF", which is incorporated herein by reference in its entirety.

## TECHNICAL FIELD

The present invention relates to the field of wind power control technologies, and specifically, to a method and an apparatus for adaptively controlling a temperature in a nacelle in a wind turbine generator system, and a device and a medium thereof.

## BACKGROUND

A temperature in a nacelle in a wind turbine generator system plays an important role in stable operation of a wind turbine. The temperature is affected by factors such as an external ambient temperature, an electric power of the generator system, a supply air rate, a temperature of incoming air, and air humidity.

A mainstream heat dissipation design currently used is a manner of drawing in air from the bottom and exhausting air from the top, that is, drawing in air from the bottom of a tower naturally and exhausting air at the top of a nacelle by using a heat-dissipating fan. A control method thereof is as follows: When the temperature in the nacelle is higher than an alarm threshold, the heat-dissipating fan is started, to improve ventilation in the nacelle, accelerate air circulation in the nacelle, and exchange heat through air circulation and convection. When the temperature in the nacelle is lower than a stop threshold, the heat-dissipating fan is stopped.

In recent years, as extreme heat occurs in summers, ambient temperatures outside wind turbines are becoming higher, and there is a growing quantity of shutdowns that are caused by high temperatures in nacelles, resulting in reductions in electric energy yields of generator systems, and reducing utilization of the generator systems. In addition, when temperatures in nacelles are high and exceed operating temperatures of parts, the parts are irreversibly damaged, reducing service lives of the parts, and increasing probabilities of fires in the nacelles.

## SUMMARY

To resolve the foregoing problems, the present invention provides a method for adaptively controlling a temperature in a nacelle in a wind turbine generator system based on an active power, in which a speed of a heat-dissipating fan is adjusted according to an average active power, and a ventilation rate is further controlled, adaptively controlling the temperature in the nacelle. In addition, the speed of the heat-dissipating fan being frequently adjusted can be avoided, and a problem that a lifetime of the heat-dissipating fan is reduced due to frequent speed adjustments can be alleviated.

According to a first aspect, a technical solution in the present invention provides a method for adaptively controlling a temperature in a nacelle in a wind turbine generator system. The method includes:

determining whether a pre-stored table of correspondences between active powers and specified speeds exists;
when the table of correspondences between active powers and specified speeds exists, collecting a temperature in a nacelle;
calculating an average active power of a wind turbine generator system over a first time threshold, and calculating an alarm threshold for a temperature in the nacelle based on the calculated average active power;
when it is determined that the temperature in the nacelle is higher than the alarm threshold, finding a specified speed of a heat-dissipating fan in the table of correspondences between active powers and specified speeds based on a current active power of the wind turbine generator system, and controlling the heat-dissipating fan to work at the specified speed found;
collecting a current temperature in the nacelle after a second time threshold elapses; and
when it is determined that the current temperature in the nacelle is higher than the temperature in the nacelle collected at a previous moment and that the specified speed of the heat-dissipating fan is lower than a rated speed, controlling the heat-dissipating fan to work at a first speed threshold, and determining whether an active power change of the wind turbine generator system over the first time threshold is less than a power change threshold; and
when the active power change is less than the power change threshold, updating the first speed threshold into the table of correspondences between active powers and specified speeds, and performing the step of collecting a current temperature in the nacelle after a second time threshold elapses; or

when it is determined that the current temperature in the nacelle is lower than or equal to the temperature in the nacelle collected at a previous moment, and when the temperature in the nacelle is lower than a stop threshold, controlling the heat-dissipating fan to stop working.

The alarm threshold that triggers operation of the fan varies with an active power. To be specific, when the active power is high, the alarm threshold is low. A specified speed is obtained for the heat-dissipating fan in the nacelle by looking up the table based on the average active power over the first time threshold, and the heat-dissipating fan is started in advance. In this way, a quantity of high-temperature shutdowns of the generator system that result from temperature change hysteresis can be reduced.

As a further limitation on the technical solution in the present invention, after the step of determining whether a pre-stored table of correspondences between active powers and specified speeds exists, the method further includes: when the table of correspondences between active powers and specified speeds does not exist, creating the table of correspondences between active powers and specified speeds.

As a further limitation on the technical solution in the present invention, the step of calculating an average active power of a wind turbine generator system over a first time threshold includes: calculating the average active power of the wind turbine generator system over the first time threshold by using a moving average filtering algorithm.

As a further limitation on the technical solution in the present invention, in the step of calculating an alarm threshold for a temperature in the nacelle based on the calculated average active power, a formula for calculating the alarm threshold is as follows:

$$\text{alarm threshold} = \text{fixed alarm threshold} - \text{average active power} \times \text{coefficient},$$

where the fixed alarm threshold is a fixed value set based on historical information, and the coefficient is a ratio that is of a temperature change over a specified time period to an average active power and that is calculated based on historical data.

As a further limitation on the technical solution in the present invention, after the step of collecting a current temperature in the nacelle after a second time threshold elapses, the method includes:

determining whether the current temperature in the nacelle is higher than the temperature in the nacelle collected at the previous moment;
when the current temperature in the nacelle is higher than the temperature in the nacelle collected at the previous moment, determining whether the specified speed of the heat-dissipating fan is lower than the rated speed;
when the specified speed of the heat-dissipating fan is lower than the rated speed, controlling the heat-dissipating fan to work at the first speed threshold, and determining whether the active power change of the wind turbine generator system over the first time threshold is less than the power change threshold; and
when the active power change is less than the power change threshold, updating the first speed threshold into the table of correspondences between active powers and specified speeds, and performing the step of collecting a current temperature in the nacelle after a second time threshold elapses; or
when the active power change is greater than or equal to the power change threshold, performing the step of collecting a current temperature in the nacelle after a second time threshold elapses.

In this way, a speed of the heat-dissipating fan being frequently adjusted can be avoided, and a problem that a lifetime of the heat-dissipating fan is reduced due to frequent speed adjustments can be alleviated.

As a further limitation on the technical solution in the present invention, after the step of determining whether the current temperature in the nacelle is higher than the temperature in the nacelle collected at the previous moment, the method further includes:

when the current temperature in the nacelle is lower than or equal to the temperature in the nacelle collected at the previous moment, determining whether the temperature in the nacelle is lower than the stop threshold; and
if the temperature in the nacelle is lower than the stop threshold, controlling the heat-dissipating fan to stop working; or
if the temperature in the nacelle is not lower than the stop threshold, performing the step of collecting a current temperature in the nacelle after a second time threshold elapses.

As a further limitation on the technical solution in the present invention, after the step of determining whether the specified speed of the heat-dissipating fan is lower than the rated speed, the method further includes: when the specified speed of the heat-dissipating fan is higher than or equal to the rated speed, controlling the wind turbine generator system to enter a power-limited operation mode, reducing a current specified active power of the wind turbine generator system by a first power threshold, and performing the step of determining whether the temperature in the nacelle is lower than the stop threshold.

The first speed threshold is equal to a sum of a specified speed and a first percentage of the rated speed. The power change threshold is equal to a second percentage of a rated active power. The first power threshold is equal to the first percentage of the rated active power.

According to a second aspect, a technical solution in the present invention provides an apparatus for adaptively controlling a temperature in a nacelle in a wind turbine generator system. The apparatus includes a correspondence table creation module, a temperature collection module, a calculation module, a temperature determining module, a fan control module, a speed determining module, a power setting module, a power change monitoring module, and a correspondence table updating module, where

the correspondence table creation module is configured to create a table of correspondences between active powers and specified speeds;

the temperature collection module is configured to collect a temperature in a nacelle;

the calculation module is configured to: calculate an average active power of a wind turbine generator system over a first time threshold, and calculate an alarm threshold for a temperature in the nacelle based on the calculated average active power;

the temperature determining module is configured to: determine whether a temperature in the nacelle is higher than the alarm threshold, and determine whether a current temperature in the nacelle is higher than a temperature in the nacelle collected at a previous moment;

the fan control module is configured to: when a temperature in the nacelle is higher than the alarm threshold, find a specified speed of a heat-dissipating fan in the table of correspondences between active powers and specified speeds based on a current active power of the wind turbine generator system, and control the heat-dissipating fan to work at the specified speed found; when a current temperature in the nacelle is higher than a temperature in the nacelle collected at a previous moment and a specified speed of the heat-dissipating fan is lower than a rated speed, control the heat-dissipating fan to work at a first speed threshold; and when it is determined that a current temperature in the nacelle is lower than or equal to a temperature in the nacelle collected at a previous moment, and when the temperature in the nacelle is lower than a stop threshold, control the heat-dissipating fan to stop working;

the speed determining module is configured to: when a current temperature in the nacelle is higher than a temperature in the nacelle collected at a previous moment, determine whether a specified speed of the heat-dissipating fan is lower than the rated speed;

the power change monitoring module is configured to: after the fan control module controls the heat-dissipating fan to work at the first speed threshold, determine whether an active power change of the wind turbine generator system over the first time threshold is less than a power change threshold;

the power setting module is configured to: when a specified speed of the heat-dissipating fan is higher than or equal to the rated speed, reduce a current specified active power of the wind turbine generator system by a first power threshold; and

the correspondence table updating module is configured to: when an active power change is less than the power change threshold, update the first speed threshold into the table of correspondences between active powers and specified speeds.

According to a third aspect, a technical solution in the present invention further provides an electronic device. The electronic device includes at least one processor and a memory that is connected to the at least one processor in a communication manner. The memory stores computer program instructions that are capable of being executed by the at least one processor. The computer program instructions are executed by the at least one processor, so that the at least one processor is capable of performing the method for adaptively controlling a temperature in a nacelle in a wind turbine generator system according to the first aspect.

According to a fourth aspect, a technical solution in the present invention further provides a non-transitory computer-readable storage medium. The non-transitory computer-readable storage medium stores computer instructions. The computer instructions enable the computer to perform the method for adaptively controlling a temperature in a nacelle in a wind turbine generator system according to the first aspect.

It can be learned from the foregoing technical solutions that the present invention has the following advantages.

1. A speed of a heat-dissipating fan being frequently adjusted can be avoided, and a problem that a lifetime of a heat-dissipating fan is reduced due to frequent speed adjustments can be alleviated.

2. An alarm threshold that triggers operation of a fan varies with an active power. To be specific, when the active power is high, the alarm threshold is low. A specified speed is obtained for a heat-dissipating fan in a nacelle by looking up a table based on an average active power over a specified time, and the heat-dissipating fan is started in advance. **In** this way, a quantity of high-temperature shutdowns of a generator system that result from temperature change hysteresis can be reduced.

3. A speed of a fan can be adjusted adaptively, and a current speed of a heat-dissipating fan can be automatically saved into an active power-specified speed table.

In addition, the present invention features reliable design principles and a simple structure, and has a quite wide application prospect.

It can be learned that compared with the conventional technology, the present invention has outstanding substantive features and significant progress, and beneficial effects that the present invention achieves are also evident.

## BRIEF DESCRIPTION OF THE DRAWINGS

To describe technical solutions in embodiments of the present invention or in the conventional technology more clearly, the following briefly describes accompanying drawings required for describing the embodiments or the conventional technology. It is clear that without creative efforts, persons of ordinary skill in the art can obtain other drawings based on these accompanying drawings.

FIG. 1 is a schematic flowchart of a method according to an embodiment of the present invention; and
FIG. 2 is a schematic block diagram of an apparatus according to an embodiment of the present invention.

## DETAILED DESCRIPTION

The present invention provides a method for adaptively controlling a temperature in a nacelle in a wind turbine generator system based on an active power, in which a speed of a heat-dissipating fan is adjusted according to an average active power, and a ventilation rate is further controlled, adaptively controlling a temperature in a nacelle. To enable persons skilled in the art to better understand technical solutions in the present invention, the following clearly and completely describes the technical solutions in embodiments of the present invention with reference to accompanying drawings in embodiments of the present invention. It is clear that the described embodiments are merely some but not all of embodiments of the present invention. All other embodiments obtained by persons of ordinary skill in the art based on embodiments of the present invention without creative efforts shall fall within the protection scope of the present invention.

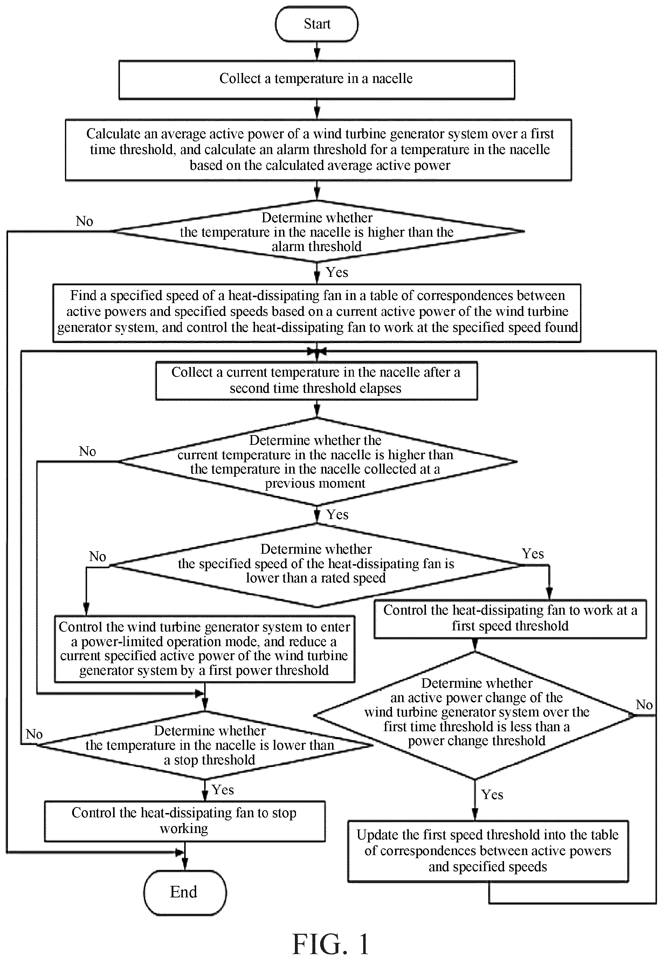

With reference to FIG. 1, an embodiment of the present invention provides a method for adaptively controlling a temperature in a nacelle in a wind turbine generator system. The method includes the following steps:

step 1: collecting a temperature in a nacelle;
step 2: calculating an average active power of a wind turbine generator system over a first time threshold, and calculating an alarm threshold for a temperature in the nacelle based on the calculated average active power;
step 3: when it is determined that the temperature in the nacelle is higher than the alarm threshold, finding a specified speed of a heat-dissipating fan in a table of correspondences between active powers and specified speeds based on a current active power of the wind turbine generator system, and controlling the heat-dissipating fan to work at the specified speed found;
step 4: collecting a current temperature in the nacelle after a second time threshold elapses;
step 5: when it is determined that the current temperature in the nacelle is higher than the temperature in the nacelle collected at a previous moment and that the specified speed of the heat-dissipating fan is lower than a rated speed, controlling the heat-dissipating fan to work at a first speed threshold, and determining whether an active power change of the wind turbine generator system over the first time threshold is less than a power change threshold;
step 6: when the active power change is less than the power change threshold, updating the first speed threshold into the table of correspondences between active powers and specified speeds, then back to step 4; and
step 5: when it is determined that the current temperature in the nacelle is lower than or equal to the temperature in the nacelle collected at a previous moment, and when the temperature in the nacelle is lower than a stop threshold, controlling the heat-dissipating fan to stop working.

The alarm threshold that triggers operation of the fan varies with an active power. To be specific, when the active power is high, the alarm threshold is low. A specified speed is obtained for the heat-dissipating fan in the nacelle by searching the table based on the average active power over the first time threshold, and the heat-dissipating fan is started in advance. In this way, a quantity of high-temperature shutdowns of the generator system that result from temperature change hysteresis can be reduced. In addition, a speed of the heat-dissipating fan being frequently adjusted can be avoided, and a problem that a lifetime of the heat-dissipating fan is reduced due to frequent speed adjustments can be alleviated. The first speed threshold is equal to a sum of a specified speed and a first percentage of the rated speed. The power change threshold is equal to a second percentage of a rated active power. A first power threshold is equal to the first percentage of the rated active power.

An embodiment of the present invention further provides a method for adaptively controlling a temperature in a nacelle in a wind turbine generator system. The method includes the following steps.

S1: Determining whether a table of correspondences between active powers and specified speeds exists.

If the table exists, performing step S3; or if the table does not exist, performing step S2.

S2: Creating a table of correspondences between active powers and specified speeds, and performing the next step.

S3: Collecting a temperature in a nacelle, and perform the next step.

S4: Calculating an average active power of a wind turbine generator system over a first time threshold, calculating an alarm threshold for a temperature in the nacelle based on the calculated average active power, and performing the next step, where a formula for calculating the alarm threshold is as follows:

alarm threshold = fixed alarm threshold - average active power × coefficient, where the fixed alarm threshold is a fixed value set based on historical information, and the first time threshold is set to 10 minutes herein; and relationships between average active powers and temperature changes are studied based on a large quantity of historical statistics, ratios of temperature changes over a specified time period to average active powers are then calculated, a table of correspondences between average active powers and ratios is generated, and a corresponding ratio, that is, a coefficient, is then found by searching the table based on a current average active power.

S5: Determining whether the temperature in the nacelle is higher than the alarm threshold. If the temperature in the nacelle is higher than the alarm threshold, performing step S6; or if the temperature in the nacelle is not higher than the alarm threshold, performing step S16.

S6: Finding a specified speed of a heat-dissipating fan in the table of correspondences between active powers and specified speeds based on a current active power of the wind turbine generator system, controlling the heat-dissipating fan to work at the specified speed found, and performing the next step.

S7: Collecting a current temperature in the nacelle after a second time threshold elapses, and performing the next step. Herein, the second time threshold is five minutes.

S8: Determining whether the current temperature in the nacelle is higher than the temperature in the nacelle collected at a previous moment.

If the current temperature in the nacelle is higher than the temperature in the nacelle collected at the previous moment, performing step S9; or if the current temperature in the nacelle is not higher than the temperature in the nacelle collected at the previous moment, performing step S14.

S9: Determining whether the specified speed of the heat-dissipating fan is lower than a rated speed.

If the specified speed of the heat-dissipating fan is lower than the rated speed, performing step S10; or if the specified speed of the heat-dissipating fan is not lower than the rated speed, performing step S13.

S10: Controlling the heat-dissipating fan to work at a first speed threshold, and performing the next step.

S11: Determining whether an active power change of the wind turbine generator system over the first time threshold is less than a power change threshold. If the active power change is less than the power change threshold, performing step S12; or if the active power change is not less than the power change threshold, performing step S7.

S12: Updating the first speed threshold into the table of correspondences between active powers and specified speeds, and performing step S7.

S13: Controlling the wind turbine generator system to enter a power-limited operation mode, reducing a current specified active power of the wind turbine generator system by a first power threshold, and performing the next step.

S14: Determining whether the temperature in the nacelle is lower than a stop threshold. If the temperature in the nacelle is lower than the stop threshold, performing step S15; or if the temperature in the nacelle is not lower than the stop threshold, performing step S7.

S15: Controlling the heat-dissipating fan to stop working, and performing the next step.

S16: End the process.

The first speed threshold is equal to a sum of a specified speed and a first percentage of the rated speed. Herein, the first speed threshold is the current specified speed of the heat-dissipating fan plus 10% of the rated speed. The power change threshold is equal to a second percentage of a rated active power. In other words, the power change threshold is equal to 2% of the rated active power. The first power threshold is equal to 10% of the rated active power.

An embodiment of the present invention further provides a method for adaptively controlling a temperature in a nacelle in a wind turbine generator system. The method includes the following steps.

SS1: Creating an active power-specified speed table. In the table, specified speeds can be dynamically updated and saved.

SS2: Collecting a temperature in a nacelle, calculating an average active power over 10 minutes by using a moving average filtering algorithm, and calculating an alarm threshold for a temperature in the nacelle based on the average active power (Note: When a temperature in the nacelle is higher than the alarm threshold, a heat-dissipating fan in the nacelle is started). A formula for calculating the alarm threshold is as follows: alarm threshold = fixed alarm threshold - average active power over 10 minutes × coefficient, where the average active power over 10 minutes is calculated by using the moving average filtering method, and the fixed alarm threshold is a constant and is determined based on lowest operating temperatures of large parts and electrical components in the nacelle. In other words, the alarm threshold for a temperature in the nacelle is dynamically calculated based on an active power of a generator system.

SS3: Determining whether the temperature in the nacelle is higher than the alarm threshold. When the temperature in the nacelle is higher than the alarm threshold, finding a specified speed of the heat-dissipating fan in the active power-specified speed table based on an active power of the generator system, and starting the heat-dissipating fan to cool down.

SS4: After a delay of five minutes, continuing to measure the temperature in the nacelle in the generator system. When the temperature in the nacelle continues to rise and the speed of the heat-dissipating fan is below a rated speed, increasing the current specified speed of the heat-dissipating fan by 10% of the rated speed, and continuing to determine whether an active power change of the generator system over 10 minutes is less than 2% of a rated active power. If the active power change is less than 2% of the rated active power, updating the current speed into the active power-specified speed table. When the temperature in the nacelle continues to rise and the speed of the heat-dissipating fan reaches the rated value, controlling the generator system to enter a power-limited operation mode, and reducing a current specified active power of the generator system by 10% of the rated active power. If the temperature in the nacelle does not rise, performing SS5.

SS5: Determining whether the temperature in the nacelle is lower than a stop threshold. When the temperature in the nacelle is lower than the stop threshold, controlling the heat-dissipating fan to stop working. If the temperature in the nacelle is not lower than the stop threshold, performing SS3.

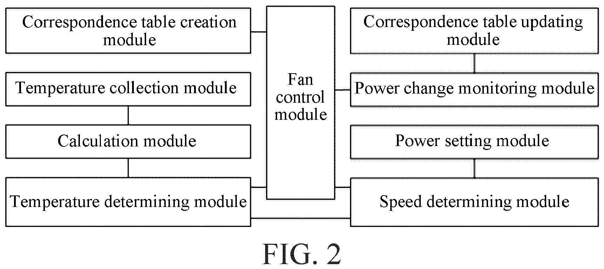

As shown in FIG. 2, an embodiment of the present invention provides an apparatus for adaptively controlling a temperature in a nacelle in a wind turbine generator system. The apparatus includes a correspondence table creation module, a temperature collection module, a calculation module, a temperature determining module, a fan control module, a speed determining module, a power setting module, a power change monitoring module, and a correspondence table updating module, where

the correspondence table creation module is configured to create a table of correspondences between active powers and specified speeds;

the temperature collection module is configured to collect a temperature in a nacelle;

the calculation module is configured to: calculate an average active power of a wind turbine generator system over a first time threshold, and calculate an alarm threshold for a temperature in the nacelle based on the calculated average active power;

the temperature determining module is configured to: determine whether a temperature in the nacelle is higher than the alarm threshold, and determine whether a current temperature in the nacelle is higher than a temperature in the nacelle collected at a previous moment;

the fan control module is configured to: when a temperature in the nacelle is higher than the alarm threshold, find a specified speed of a heat-dissipating fan in the table of correspondences between active powers and specified speeds based on a current active power of the wind turbine generator system, and control the heat-dissipating fan to work at the specified speed found; when a current temperature in the nacelle is higher than a temperature in the nacelle collected at a previous moment and a specified speed of the heat-dissipating fan is lower than a rated speed, control the heat-dissipating fan to work at a first speed threshold; and when it is determined that a current temperature in the nacelle is lower than or equal to a temperature in the nacelle collected at a previous moment, and when the temperature in the nacelle is lower than a stop threshold, control the heat-dissipating fan to stop working;

the speed determining module is configured to: when a current temperature in the nacelle is higher than a temperature in the nacelle collected at a previous moment, determine whether a specified speed of the heat-dissipating fan is lower than the rated speed;

the power change monitoring module is configured to: after the fan control module controls the heat-dissipating fan to work at the first speed threshold, determine whether an active power change of the wind turbine generator system over the first time threshold is less than a power change threshold;

the power setting module is configured to: when a specified speed of the heat-dissipating fan is higher than or equal to the rated speed, reduce a current specified active power of the wind turbine generator system by a first power threshold; and

the correspondence table updating module is configured to: when an active power change is less than the power change threshold, update the first speed threshold into the table of correspondences between active powers and specified speeds.

An embodiment of the present invention further provides an electronic device. The electronic device includes a processor, a communication interface, a memory, and a bus. The processor, the communication interface, and the memory communicate with each other through the bus. The bus may be configured to transfer information between the electronic device and a sensor. The processor may invoke logic instructions in the memory to perform the following method:

S1: Determining whether a table of correspondences between active powers and specified speeds exists. If the table exists, performing step S3; or if the table does not exist, performing step S2. S2: Creating a table of correspondences between active powers and specified speeds, and performing the next step. S3: Collecting a temperature in a nacelle, and performing the next step. S4: Calculating an average active power of a wind turbine generator system over a first time threshold, calculating an alarm threshold for a temperature in the nacelle based on the calculated average active power, and performing the next step, where a formula for calculating the alarm threshold is as follows: alarm threshold = fixed alarm threshold - average active power × coefficient, where the fixed alarm threshold is a fixed value set based on historical information, and the coefficient is a constant specified. S5: Determining whether the temperature in the nacelle is higher than the alarm threshold. If the temperature in the nacelle is higher than the alarm threshold, performing step S6; or if the temperature in the nacelle is not higher than the alarm threshold, performing step S16. S6: Finding a specified speed of a heat-dissipating fan in the table of correspondences between active powers and specified speeds based on a current active power of the wind turbine generator system, controlling the heat-dissipating fan to work at the specified speed found, and performing the next step. S7: Collecting a current temperature in the nacelle after a second time threshold elapses, and performing the next step. S8: Determining whether the current temperature in the nacelle is higher than the temperature in the nacelle collected at a previous moment. If the current temperature in the nacelle is higher than the temperature in the nacelle collected at the previous moment, performing step S9; or if the current temperature in the nacelle is not higher than the temperature in the nacelle collected at the previous moment, performing step S14. S9: Determining whether the specified speed of the heat-dissipating fan is lower than a rated speed. If the specified speed of the heat-dissipating fan is lower than the rated speed, performing step S10; or if the specified speed of the heat-dissipating fan is not lower than the rated speed, performing step S13. S10: Controlling the heat-dissipating fan to work at a first speed threshold, and performing the next step. S11: Determining whether an active power change of the wind turbine generator system over the first time threshold is less than a power change threshold. If the active power change is less than the power change threshold, performing step S12; or if the active power change is not less than the power change threshold, performing step S7. S12: Updating the first speed threshold into the table of correspondences between active powers and specified speeds, and performing step S7. S13: Controlling the wind turbine generator system to enter a power-limited operation mode, reducing a current specified active power of the wind turbine generator system by a first power threshold, and performing the next step. S14: Determining whether the temperature in the nacelle is lower than a stop threshold. If the temperature in the nacelle is lower than the stop threshold, performing step S15; or if the temperature in the nacelle is not lower than the stop threshold, performing step S7. S15: Controlling the heat-dissipating fan to stop working, and performing the next step. S16: End the process.

In addition, when the logic instructions in the memory can be implemented in a form of a software functional unit and sold or used as an independent product, the logic instructions may be stored in a computer-readable storage medium. Based on such an understanding, the technical solutions in the present invention essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disc, or a compact disc.

An embodiment of the present invention provides a non-transitory computer-readable storage medium. The non-transitory computer-readable storage medium stores computer instructions. The computer instructions enable a computer to perform the methods provided in the foregoing method embodiments, for example, including: SS1: Creating an active power-specified speed table. SS2: Collecting a temperature in a nacelle, calculating an average active power over 10 minutes by using a moving average filtering algorithm, and calculating an alarm threshold for a temperature in the nacelle based on the average active power, where a formula for calculating the alarm threshold is as follows: alarm threshold = fixed alarm threshold - average active power over 10 minutes × coefficient. SS3: Determining whether the temperature in the nacelle is higher than the alarm threshold. When the temperature in the nacelle is higher than the alarm threshold, finding a specified speed of a heat-dissipating fan in the active power-specified speed table based on an active power of a generator system, and starting the heat-dissipating fan to cool down. SS4: After a delay of five minutes, continuing to measure the temperature in the nacelle in the generator system. When the temperature in the nacelle continues to rise and the speed of the heat-dissipating fan is below a rated speed, increasing the current specified speed of the heat-dissipating fan by 10% of the rated speed, and continuing to determine whether an active power change of the generator system over 10 minutes is less than 2% of a rated active power. If the active power change is less than 2% of the rated active power, updating the current speed into the active power-specified speed table. When the temperature in the nacelle continues to rise and the speed of the heat-dissipating fan reaches the rated value, controlling the generator system to enter a power-limited operation mode, and reducing a current specified active power of the generator system by 10% of the rated active power. If the temperature in the nacelle does not rise, performing SS5. SS5: Determining whether the temperature in the nacelle is lower than a stop threshold. When the temperature in the nacelle is lower than the stop threshold, controlling the heat-dissipating fan to stop working. If the temperature in the nacelle is not lower than the stop threshold, performing SS3.

Although the present invention is described in detail with reference to the accompanying drawings and by using preferred embodiments, the present invention is not limited thereto. Without departing from the spirit and essence of the present invention, persons of ordinary skill in the art may make various equivalent modifications or replacements to embodiments of the present invention, and these modifications or replacements shall all fall within the scope of the present invention. Alternatively, any variation or replacement readily figured out by persons skilled in the art within the technical scope disclosed in the present invention shall fall within the protection scope of the present invention. Therefore, the protection scope of the present invention shall be subject to the protection scope of the claims.

**Claims**

1. A method for adaptively controlling a temperature in a nacelle in a wind turbine generator system, the method comprising:

   determining whether a pre-stored table of correspondences between active powers and specified speeds exists;
   when the table of correspondences between active powers and specified speeds exists, collecting a temperature in a nacelle;
   calculating an average active power of a wind turbine generator system over a first time threshold, and calculating an alarm threshold for a temperature in the nacelle based on the calculated average active power, wherein specifically, the average active power of the wind turbine generator system over the first time threshold is calculated by using a moving average filtering algorithm, and a formula for calculating the alarm threshold is as follows:

   alarm threshold = fixed alarm threshold - average active power $\times$ coefficient, wherein the fixed alarm threshold is a fixed value set based on historical information, and the coefficient is a ratio that is of a temperature change over a specified time period to an average active power and that is calculated based on historical data;
   when it is determined that the temperature in the nacelle is higher than the alarm threshold, finding a specified speed of a heat-dissipating fan in the table of correspondences between active powers and specified speeds based on a current active power of the wind turbine generator system, and controlling the heat-dissipating fan to work at the specified speed found;
   collecting a current temperature in the nacelle after a second time threshold elapses; and
   when it is determined that the current temperature in the nacelle is higher than the temperature in the nacelle collected at a previous moment and that the specified speed of the heat-dissipating fan is lower than a rated speed, controlling the heat-dissipating fan to work at a first speed threshold, and determining whether an active power change of the wind turbine generator system over the first time threshold is less than a power change threshold; and
   when the active power change is less than the power change threshold, updating the first speed threshold into the table of correspondences between active powers and specified speeds, and performing the step of collecting a current temperature in the nacelle after a second time threshold elapses; or
   when it is determined that the current temperature in the nacelle is lower than or equal to the temperature in the nacelle collected at a previous moment, and when the temperature in the nacelle is lower than a stop threshold, controlling the heat-dissipating fan to stop working.

2. The method for adaptively controlling a temperature in a nacelle in a wind turbine generator system according to claim 1, after the step of determining whether a pre-stored table of correspondences between active powers and specified speeds exists, the method further comprising:
   when the table of correspondences between active powers and specified speeds does not exist, creating the table of correspondences between active powers and specified speeds.

3. The method for adaptively controlling a temperature in a nacelle in a wind turbine generator system according to claim 2, after the step of collecting a current temperature in the nacelle after a second time threshold elapses, the method comprising:

determining whether the current temperature in the nacelle is higher than the temperature in the nacelle collected at the previous moment;

when the current temperature in the nacelle is higher than the temperature in the nacelle collected at the previous moment, determining whether the specified speed of the heat-dissipating fan is lower than the rated speed;

when the specified speed of the heat-dissipating fan is lower than the rated speed, controlling the heat-dissipating fan to work at the first speed threshold, and determining whether the active power change of the wind turbine generator system over the first time threshold is less than the power change threshold; and

when the active power change is less than the power change threshold, updating the first speed threshold into the table of correspondences between active powers and specified speeds, and performing the step of collecting a current temperature in the nacelle after a second time threshold elapses; or

when the active power change is greater than or equal to the power change threshold, performing the step of collecting a current temperature in the nacelle after a second time threshold elapses.

4. The method for adaptively controlling a temperature in a nacelle in a wind turbine generator system according to claim 3, after the step of determining whether the current temperature in the nacelle is higher than the temperature in the nacelle collected at the previous moment, the method further comprising:

when the current temperature in the nacelle is lower than or equal to the temperature in the nacelle collected at the previous moment, determining whether the temperature in the nacelle is lower than the stop threshold; and

if the temperature in the nacelle is lower than the stop threshold, controlling the heat-dissipating fan to stop working; or

if the temperature in the nacelle is not lower than the stop threshold, performing the step of collecting a current temperature in the nacelle after a second time threshold elapses.

5. The method for adaptively controlling a temperature in a nacelle in a wind turbine generator system according to claim 4, after the step of determining whether the specified speed of the heat-dissipating fan is lower than the rated speed, the method further comprising:

when the specified speed of the heat-dissipating fan is higher than or equal to the rated speed, controlling the wind turbine generator system to enter a power-limited operation mode, reducing a current specified active power of the wind turbine generator system by a first power threshold, and performing the step of determining whether the temperature in the nacelle is lower than the stop threshold.

6. An apparatus based on the method for adaptively controlling a temperature in a nacelle in a wind turbine generator system according to any one of claims 1 to 5, the apparatus comprising a correspondence table creation module, a temperature collection module, a calculation module, a temperature determining module, a fan control module, a speed determining module, a power setting module, a power change monitoring module, and a correspondence table updating module, wherein

the correspondence table creation module is configured to create a table of correspondences between active powers and specified speeds;

the temperature collection module is configured to collect a temperature in a nacelle;

the calculation module is configured to: calculate an average active power of a wind turbine generator system over a first time threshold, and calculate an alarm threshold for a temperature in the nacelle based on the calculated average active power;

the temperature determining module is configured to: determine whether a temperature in the nacelle is higher than the alarm threshold, and determine whether a current temperature in the nacelle is higher than a temperature in the nacelle collected at a previous moment;

the fan control module is configured to: when a temperature in the nacelle is higher than the alarm threshold, find a specified speed of a heat-dissipating fan in the table of correspondences between active powers and specified speeds based on a current active power of the wind turbine generator system, and control the heat-dissipating fan to work at the specified speed found; when a current temperature in the nacelle is higher than a temperature in the nacelle collected at a previous moment and a specified speed of the heat-dissipating fan is lower than a rated speed, control the heat-dissipating fan to work at a first speed threshold; and when it is determined that a current temperature in the nacelle is lower than or equal to a temperature in the nacelle collected at a previous moment, and when the temperature in the nacelle is lower than a stop threshold, control the heat-dissipating fan to stop working;

the speed determining module is configured to: when a current temperature in the nacelle is higher than a temperature in the nacelle collected at a previous moment, determine whether a specified speed of the heat-dissipating fan is lower than the rated speed;

the power change monitoring module is configured to: after the fan control module controls the heat-dissipating fan to work at the first speed threshold, determine whether an active power change of the wind turbine generator system over the first time threshold is less than a power change threshold;

the power setting module is configured to: when a specified speed of the heat-dissipating fan is higher than or equal to the rated speed, reduce a current specified active power of the wind turbine generator system by a first power threshold; and

the correspondence table updating module is configured to: when an active power change is less than the power change threshold, update the first speed threshold into the table of correspondences between active powers and specified speeds.

7. An electronic device, wherein the electronic device comprises at least one processor and a memory that is connected to the at least one processor in a communication manner; the memory stores computer program instructions that are capable of being executed by the at least one processor; and the computer program instructions are executed by the at least one processor, so that the at least one processor is capable of performing the method for adaptively controlling a temperature in a nacelle in a wind turbine generator system according to any one of claims 1 to 5.

8. A non-transitory computer-readable storage medium, wherein the non-transitory computer-readable storage medium stores computer instructions, wherein the computer instructions enable a computer to perform the method for adaptively controlling a temperature in a nacelle in a wind turbine generator system according to any one of claims 1 to 5.

Start

Collect a temperature in a nacelle

Calculate an average active power of a wind turbine generator system over a first time threshold, and calculate an alarm threshold for a temperature in the nacelle based on the calculated average active power

Determine whether the temperature in the nacelle is higher than the alarm threshold — No

Yes

Find a specified speed of a heat-dissipating fan in a table of correspondences between active powers and specified speeds based on a current active power of the wind turbine generator system, and control the heat-dissipating fan to work at the specified speed found

Collect a current temperature in the nacelle after a second time threshold elapses

Determine whether the current temperature in the nacelle is higher than the temperature in the nacelle collected at a previous moment — No

Yes

Determine whether the specified speed of the heat-dissipating fan is lower than a rated speed — No / Yes

Control the heat-dissipating fan to work at a first speed threshold

Control the wind turbine generator system to enter a power-limited operation mode, and reduce a current specified active power of the wind turbine generator system by a first power threshold

Determine whether an active power change of the wind turbine generator system over the first time threshold is less than a power change threshold — No

Yes

Determine whether the temperature in the nacelle is lower than a stop threshold — No

Yes

Control the heat-dissipating fan to stop working

Update the first speed threshold into the table of correspondences between active powers and specified speeds

End

FIG. 1

| Correspondence table creation module | | Correspondence table updating module |
|---|---|---|
| Temperature collection module | Fan control module | Power change monitoring module |
| Calculation module | | Power setting module |
| Temperature determining module | | Speed determining module |

FIG. 2

## INTERNATIONAL SEARCH REPORT

| International application No. |
| --- |
| **PCT/CN2023/127945** |

**A. CLASSIFICATION OF SUBJECT MATTER**

F03D80/60(2016.01)i

According to International Patent Classification (IPC) or to both national classification and IPC

**B. FIELDS SEARCHED**

Minimum documentation searched (classification system followed by classification symbols)

IPC:F03D

Documentation searched other than minimum documentation to the extent that such documents are included in the fields searched

Electronic data base consulted during the international search (name of data base and, where practicable, search terms used)

CNTXT, ENTXTC, WPABSC, CJFD: 风力, 风电, 风轮, 机舱, 温度, 控制, 调节, 有功功率, 散热, 风扇, 风机, 速度, 转速, 表. ENTXT, VEN, WPABS, DWPI: wind power, wind turbine, cabin, nacelle, temperature, control, adjust, active power, radiate, fan, speed, table.

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115949560 A (CRRC SHANDONG WIND POWER CO., LTD.) 11 April 2023 (2023-04-11) description, paragraphs 6-36, and figures 1-2 | 1-8 |
| A | CN 102808743 A (GUODIAN UNITED POWER TECHNOLOGY CO., LTD.) 05 December 2012 (2012-12-05) description, paragraphs 4-28, and figures 1-4 | 1-8 |
| A | CN 110374798 A (SHENYANG INSTITUTE OF ENGINEERING) 25 October 2019 (2019-10-25) description, paragraphs 3-47, and figures 1-3 | 1-8 |
| A | CN 109973329 A (INTEGRATED ELECTRONIC SYSTEMS LAB CO., LTD.) 05 July 2019 (2019-07-05) entire document | 1-8 |
| A | CN 210889230 U (CHINA HUANENG CLEAN ENERGY RESEARCH INSTITUTE) 30 June 2020 (2020-06-30) entire document | 1-8 |

☑ Further documents are listed in the continuation of Box C.    ☑ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **23 January 2024** | **31 January 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" style="text-align:center"><strong>INTERNATIONAL SEARCH REPORT</strong></td><td>International application No.<br><strong>PCT/CN2023/127945</strong></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | EP 2957769 A1 (HITACHI, LTD.) 23 December 2015 (2015-12-23)<br>entire document | 1-8 |

Form PCT/ISA/210 (second sheet) (July 2022)

INTERNATIONAL SEARCH REPORT
Information on patent family members

International application No.

**PCT/CN2023/127945**

| Patent document cited in search report | | | Publication date (day/month/year) | Patent family member(s) | | | Publication date (day/month/year) |
|---|---|---|---|---|---|---|---|
| CN | 115949560 | A | 11 April 2023 | CN | 115949560 | B | 30 May 2023 |
| CN | 102808743 | A | 05 December 2012 | CN | 102808743 | B | 11 March 2015 |
| CN | 110374798 | A | 25 October 2019 | CN | 110374798 | B | 19 May 2020 |
| CN | 109973329 | A | 05 July 2019 | CN | 109973329 | B | 25 September 2020 |
| CN | 210889230 | U | 30 June 2020 | CN | 110761959 | A | 07 February 2020 |
| EP | 2957769 | A1 | 23 December 2015 | JP | 2016003637 | A | 12 January 2016 |
| | | | | JP | 6356500 | B2 | 11 July 2018 |
| | | | | TW | 201600714 | A | 01 January 2016 |
| | | | | TWI | 617909 | B | 11 March 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310243747